# EUROPÄISCHE PATENTSCHRIFT

(11) **EP 0 721 832 B1**
(45) Veröffentlichungstag und Bekanntmachung des Hinweises auf die Patenterteilung: **07.04.1999**
(21) Anmeldenummer: 95120090.6
(22) Anmeldetag: 19.12.1995
(51) Int. Cl.: B29C 45/17, B29C 45/16

(54) **Verfahren zur Herstellung von verhältnismässig dickwandigen Bürstenkörpern, insbesondere von Zahnbürsten aus thermoplastischem Kunststoff**
Process for production of relatively thick-walled brush bodies, especially tooth brushes made of plastics
Procédé de fabrication de corps de brosse à paroi relativement épaissé, en particulier de brosse à dents en matière thermoplastique

(30) Priorität: 04.01.1995 DE 19500138
(43) Veröffentlichungstag der Anmeldung: 17.07.1996
(73) Patentinhaber: M + C SCHIFFER GmbH, D-53577 Neustadt (DE)
(72) Erfinder: Lanvers, Andreas, Dr.-Ing., D-53604 Bad Honnef (DE)
(74) Vertreter: Grünecker, Kinkeldey, Stockmair & Schwanhäusser Anwaltssozietät

(56) Entgegenhaltungen:
- EP-A- 0 485 726
- EP-A- 0 504 571
- EP-A- 0 668 140
- DE-A- 4 226 390
- DE-A- 4 231 270
- US-A- 4 247 515
- US-A- 5 295 800
- DATABASE WPI Section Ch, Week 8410 Derwent Publications Ltd., London, GB; Class A32, AN 84-059213 & JP-A-59 016 728 (KISHIMOTO SANGYO KK) , 27.Januar 1984
- DATABASE WPI Section Ch, Week 9315 Derwent Publications Ltd., London, GB; Class A32, AN 93-120788 & JP-A-05 057 751 (SUNSTAR CHEM IND) , 9.März 1993

## Beschreibung

Die Erfindung bezieht sich auf ein Verfahren zur Herstellung von verhältnismäßig dickwandigen Bürstenkörpern, insbesondere von Zahnbürsten, aus thermoplastischem Kunststoff, bei dem der geschmolzene Kunststoff über mindestens eine Düse in mindestens einen Formhohlraum einer Form eingespritzt wird.

Massenartikel aus thermoplastischem Kunststoff, beispielsweise Zahnbürsten, werden im Spritzgießverfahren hergestellt, wobei der geschmolzene Kunststoff über eine Heißkanaldüse, beispielsweise mit einem Nadelverschluß, in einem Formhohlraum bzw. in mehrere Formhohlräume eingespritzt wird.

Um eine gut handhabbare Zahnbürste zu erhalten, muß der Griff einen verhältnismäßig großen Querschnitt aufweisen, der einerseits verhältnismäßig lange Kühlzeiten mit sich bringt, was sich auf die Zykluszeit des Spritzvorganges nachteilig auswirkt, und der andererseits zu Einfallstellen führen kann, die die Zahnbürste entweder unbrauchbar machen oder deren Qualität erheblich vermindern.

Schließlich ist auch zu berücksichtigen, daß für den Griffbereich einer Zahnbürste verhältnismäßig viel wertvoller Werkstoff und damit Rohstoff benötigt wird.

Insbesondere bei hochwertigen Zahnbürsten ist es bekannt (vgl. EP-A-0504571), den Borstenkörper aus mindestens zwei, eine unterschiedliche Farbe, meist aber auch unterschiedliche Eigenschaften aufweisenden Kunststoffkomponenten zu spritzen. Dabei wird zunächst ein sogenannter Bürstengrundkörper aus einer ersten kompakten, der Festigkeitsanforderung genügenden Kunststoffkomponente gespritzt, während in einer weiteren Form, deren Formnester nach dem Einsetzen der Bürstengrundkörper noch einen Freiraum aufweisen, die zweite Kunststoffkomponente eingespritzt wird. Auch bei einem solchen Bürstenkörper wird noch verhältnismäßig viel wertvoller Werkstoff bzw. Rohstoff benötigt.

Die ältere aber noch nicht veröffentlichte EP-A-0668140 gilt für die vorliegende Anmeldung als nächstliegender Stand der Technik gemäß Artikel 54(3) EPÜ. Sie zeigt ein Verfahren zur Herstellung von verhältnismäßig dickwandigen Bürstenkörpern, insbesondere von Zahnbürsten, aus thermoplastischem Kunststoff, bei dem nach der Einspritzung einer vorgegebenen, mindestens einen Formhohlraum einer Form nur teilweise füllenden Menge des geschmolzenen Kunststoffes über eine Hohlnadel ein Druckmedium in denselben eingeführt und der noch nicht erhärtete Kunststoff unter Bildung eines Hohlraumes an der Wandung des Formhohlraumes zum Anliegen gebracht wird und bei dem nach dem Entfernen der Hohlnadel die verbleibende Eingasungsöffnung durch Einspritzen von geschmolzenem Kunststoff geschlossen wird.

Der Erfindung liegt die Aufgabe zugrunde, ein Verfahren zur Herstellung von verhältnismäßig dickwandigen Bürstenkörpern, beispielsweise von Zahnbürsten, aus thermoplastischem Kunststoff aufzuzeigen, bei dem der Verbrauch an Kunststoff ohne Qualitätsminderung reduziert wird, ein äußerlich geschlossener Bürstenkörper ohne "tote Ecken" entsteht und bei dem zusätzlich die Kühlzeiten verringert und damit die Anzahl der Zyklen erhöht werden kann.

Zur Lösung dieser Aufgabe wird gemäß der Erfindung bei einem Verfahren der eingangs beschriebenen Gattung vorgeschlagen, daß der nach der Einspritzung gebildete Hohlraum und die Eingasungsöffnung in einer zweiten Form durch Einspritzen eines anderen Kunststoffes gefüllt wird.

Durch ein solches Verfahren wird in dem aus thermoplastischem Kunststoff bestehenden Bürstenkörper, beispielsweise einer Zahnbürste, ein Hohlraum erzeugt, durch den der Bedarf an wertvollem Kunststoff bzw. Rohstoff erheblich reduziert werden kann. Durch einen solchen Hohlraum verringert sich zwangsläufig die Wandstärke des Bürstenkörpers, so daß die Abkühlung erheblich rascher als bisher erfolgen kann. Dadurch reduziert sich die Zykluszeit einer Spritzgießvorrichtung erheblich und die Entstehung von Einfallstellen in dem Bürstenkörper ist weitgehend ausgeschlossen.

Bevorzugte Ausgestaltungen eines Verfahrens gemäß der Erfindung sind in den Ansprüchen 2 - 5 offenbart.

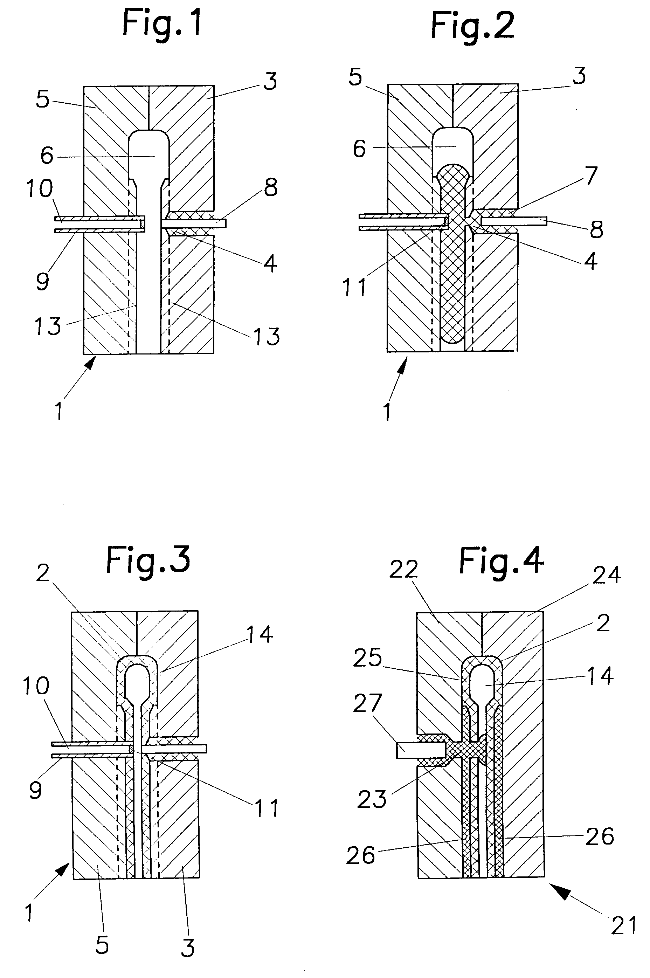

Die Erfindung wird nachfolgend anhand eines in einer Zeichnung in stark vereinfachter Weise dargestellten Ausführungsbeispieles näher erläutert. Dabei zeigen
- Fign. 1 - 4: die aufeinanderfolgenden Verfahrensschritte bei der Herstellung des Bürstenkörpers einer Zahnbürste nach dem Verfahren gemäß der Erfindung.

In den Fign. 1 - 3 der Erfindung ist ausschnittsweise ein Spritzgießwerkzeug 1 gezeigt, welches zur Herstellung eines nur teilweise gezeigten Bürstenkörpers 2 von an sich be

Im dargestellten Ausführungsbeispiel mündet die Hohlnadel 9, in der ein Gasströmungskanal 10 ausgebildet ist, gegenüber der Düse 4 in den Formhohlraum 6. Das dem Formhohlraum 6 zugewandte Ende des Gasströmungskanales 10 ist durch einen Einsatz 11 verschlossen, der gasdurchlässig ausgebildet ist und beispielsweise aus Sintermetall bestehen kann. Auch andere Ausgestaltungen des in dem Formhohlraum 6 ragenden Endes der Hohlnadel 9 sind möglich. Diese Ausgestaltung der Hohlnadel 9 stellt sicher, daß über den Gasströmungskanal 10 nur ein Gas, beispielsweise ein Inertgas, in den Formhohlraum 6 eingeleitet und wieder abgezogen werden kann. Die Ausgestaltung des Einsatzes 11 verhindert, daß thermoplastischer Kunststoff in den Gasströmungskanal 10 eindringen und denselben verstopfen kann.

Wie bereits weiter oben erwähnt, dient das Spritzgießwerkzeug 1 zur Herstellung von Bürstenkörpern 2, die aus zwei Kunststoffkomponenten gebildet werden. Dies bedeutet, daß der Formhohlraum 6 des Spritzgießwerkzeuges 1 nicht dem fertigen Bürstenkörper 2, sondern einem sogenannten Bürstengrundkörper entspricht. Dies ist in den Fign. 1 - 3 der Zeichnung daran zu erkennen, daß hier der Formhohlraum 6 durch Vorsprünge 13 in Teilbereichen reduziert ist. Diese Teilbereiche befinden sich beispielsweise an der Oberseite und der Unterseite des Bürstenkörpers 2 und dienen somit zur Herstellung des in seinem Querschnitt und in seinem Volumen teilweise reduzierten Bürstengrundkörpers.

Für die Erläuterung der Arbeitsweise des in den Fign. 1 - 3 gezeichneten Spritzgießwerkzeuges wird nun davon ausgegangen, daß der Kanal 7 bereits vollständig mit geschmolzenem, thermoplastischem Kunststoff gefüllt ist, wie dies die Figur 1 der Zeichnung deutlich erkennen läßt. Der Formhohlraum 6 ist gemäß der Fig. 1 noch leer. Jetzt wird die Schließnadel 8 in ihre Stellung gemäß Fig. 2 bewegt, so daß der Kanal 7 und damit die Düse 4 freigegeben werden. Jetzt kann über den Kanal 7 geschmolzener Kunststoff in den Formhohlraum 6 einströmen, wie dies die Fig. 2 erkennen läßt. Sobald sich eine vorgegebene, den Formhohlraum 6 nur teilweise ausfüllende Menge des geschmolzenen Kunststoffes im Formhohlraum 6 (Fig. 2) befindet, wird die Schließnadel 8 wieder in ihre Schließstellung gemäß den Fign. 1 und 3 bewegt.

Jetzt wird über den Strömungskanal 10 der Hohlnadel 9 ein unter Druck stehendes Gas, beispielsweise ein Inertgas, in den im Formhohlraum 6 befindlichen Kunststoff eingeleitet. Dieses Gas treibt die sogenannte Fließfront des zuvor eingefüllten thermoplastischen Kunststoffes weiter voran und formt in der Kunststoffseele einen Hohlraum 14 aus, der in der Fig. 3 deutlich zu erkennen ist. Die Außenkontur des sogenannten Bürstengrundkörpers wird dabei vollständig ausgeformt, indem die Kunststoffschmelze mittels des Gasinnendruckes im Hohlraum 14 gegen die Wandung des Formhohlraumes 6 gepreßt wird. Sobald der Bürstengrundkörper vollständig ausgeformt ist, kann der Gasdruck noch solange erhalten bleiben, bis eine ausreichende Dimensionsstabilität des Bürstengrundkörpers als Folge der Kühleinwirkung des Spritzgießwerkzeuges 1 erreicht ist. Anschließend ist es vorteilhaft, das eingepreßte Gas wieder über den Gasströmungskanal 10 abzuziehen bis der Hohlraum 14 wieder weitgehend drucklos ist. Dabei kann das zurückgewonnene Gas gegebenenfalls wieder zur Bildung eines Hohlraumes 14 im nächsten Bürstengrundkörper mitverwendet werden.

Sobald sich kein nennenswerter Überdruck mehr in dem Hohlraum 14 befindet, wird das Spritzgießwerkzeug 1 über die bewegbare Formplatte 5 geöffnet. Über eine besondere, in der Zeichnung nicht dargestellte und in das Spritzgießwerkzeug 1 integrierte Halterung kann nun der gespritzte Bürstengrundkörper entnommen und einem weiteren Spritzgießwerkzeug 21 zugeführt werden (Fig. 4). Auch dieses Spritzgießwerkzeug 21 besteht aus einer ortsfesten Formplatte 22, in der eine Düse 23 eingebaut ist, und aus einer verschiebbaren, auswerferseitigen Formplatte 24. Auch hier sind in der ortsfesten und in der beweglichen Formplatte 22, 24 sich gegenüberliegend angeordnete Aussparungen vorgesehen, die bei geschlossenem Spritzgießwerkzeug 21 mindestens einen Formhohlraum 25 begrenzen.

Es ist vorteilhaft, wenn die beiden Spritzgießwerkzeuge 1 und 21 als sogenanntes Wendewerkzeug ausgebildet sind. Dies ermöglicht es, über die vorerwähnte Halterung, den von demselben erfaßten Bürstengrundkörper um einen definierten Winkel zu drehen, so daß der in dem Formhohlraum 6 des Spritzgießwerkzeuges 1 gebildete Bürstengrundkörper nun in den Bereich des Formhohlraumes 25 des Spritzgießwerkzeuges 21 gelangt. Der Formhohlraum 25 des Spritzgießwerkzeuges 21 ist nun so ausgebildet, daß es den Bürstengrundkörper 1 aufnehmen kann, wobei jedoch noch den Vorsprüngen 13 des Spritzgießwerkzeuges 1 entsprechende Freiräume 26 verbleiben. Nach dem Schließen des Spritzgießwerkzeuges 21 kann nun über die Düse 23 in die Freiräume 26 die zweite Kunststoffkomponente eingespritzt werden, die aus dem Bürstengrundkörper den fertigen Bürstenkörper 2 macht. Dazu ist in der Düse 23 eine Schließnadel 27 vorgesehen, die für das Einspritzen der zweiten Kunststoffkomponente kurzzeitig geöffnet wird, wie dies in der Fig. 4 dargestellt ist.

Durch das Einspritzen der zweiten Kunststoffkomponente in die Freiräume 26 des Formhohlraumes 25 wird der durch das Einblasen des Gases im Spritzgießwerkzeug 1 entstandene Hohlraum 14 (Fig. 3) nach außen vollständig abgeschlossen, ohne daß dazu ein zusätzlicher Arbeitsgang erforderlich ist. Nach einer sogenannten Restkühlung kann dann der fertige Bürstenkörper 2 entformt bzw. entnommen werden.

Sind die beiden Spritzgußwerkzeuge 1, 21 Bestandteil eines sogenannten Wendewerkzeuges, wird während des Spritzvorganges des Bürstengrundkörpers im Spritzgießwerkzeug 1 gleichzeitig im Spritzgießwerkzeug 21 der Bürstengrundkörper durch die zweite Kunststoffkomponente zum fertigen Bürstenkörper 2 gespritzt und umgekehrt.

In Abänderung des erläuterten Ausführungsbeispieles ist es möglich, die durch das Einblasen des Gases bei der Bildung des Hohlraumes 14 entstandene Einblasöffnung in einer anderen, getrennten Form durch Einspritzen der zweiten Kunststoffkomponente zu schließen. Schließlich ist es möglich, die Vorsprünge 13 in dem Spritzgießwerkzeug 1 durch Schieber zu bilden, die nach dem Einspritzen und Erhärten der ersten Kunststoffkomponente zurückgezogen werden. Die dadurch entstandenen Hohl- bzw. Freiräume können dann auch in dem ersten Spritzgießwerkzeug 1 mit der zweiten Kunststoffkomponente ausgefüllt werden.

## Patentansprüche

1. Verfahren zur Herstellung von verhältnismäßig dickwandigen Bürstenkörpern, insbesondere von Zahnbürsten, aus thermoplastischem Kunststoff, bei dem nach der Einspritzung einer vorgegebenen, mindestens einen Formhohlraum (6), einer Form (1) nur teilweise füllenden Menge des geschmolzenen Kunststoffes über eine Hohlnadel (9) ein Druckmedium in denselben eingeführt und der noch nicht erhärtete Kunststoff unter Bildung eines Hohlraumes (14) an der Wandung des Formhohlraumes (6) zum Anliegen gebracht wird und bei dem nach dem Entfernen der Hohlnadel (9) die verbleibende Eingasungsöffnung durch Einspritzen von geschmolzenem Kunststoff geschlossen wird,
wobei der Hohlraum (14) und
die Eingasungsöffnung in einer zweiten Form (21) durch Einspritzen eines anderen Kunststoffes gefüllt wird.

2. Verfahren nach Anspruch 1,
dadurch gekennzeichnet,
daß mit dem in die Eingasungsöffnung eingespritzten, anderen Kunststoff, mindestens ein weiterer, im äußeren Bereich des Bürstenkörpers in der zweiten Form (21) gebildeter Formhohlraum (26) ausgefüllt wird.

3. Verfahren nach Anspruch 1 oder 2,
dadurch gekennzeichnet,
daß der weitere, freigebbare Formhohlraum in einem Wendewerkzeug gebildet und dort mit Kunststoff ausgespritzt bzw. gefüllt wird.

4. Verfahren nach mindestens einem der Ansprüche 1 bis 3, dadurch gekennzeichnet,
daß der andere Kunststoff eine unterschiedliche Farbe und/oder eine unterschiedliche Zusammensetzung aufweist.

5. Verfahren nach mindestens einem der Ansprüche 1 bis 4, dadurch gekennzeichnet,
daß die erste Anspritzstelle, die Eingasungsöffnung und/oder die zweite Anspritzstelle mit Abstand voneinander im Formhohlraum angeordnet sind.

## Claims

1. Process for the manufacture of relatively thick-walled brush bodies, particularly for toothbrushes, of thermoplastic material, in which, after injection of a predetermined quantity of molten plastic material only partially filling at least one mould cavity (6) of a mould (1), a pressure medium is introduced into the said [mould cavity] through a hollow needle (9) and the still unhardened plastic material is brought into contact with the wall of the mould cavity (6) so that [an inner] cavity (14) is formed, and in which, after removal of the hollow needle (9), the gas injection hole which is left is closed by injection of molten plastic material, the [inner] cavity (14) and the gas injection hole being filled in a second mould (21) by injection of a different plastic material.

2. Process according to Claim 1, characterized in that a further mould cavity (26) formed in the second mould (21) in the outer region of the brush body is filled with the different plastic material injected into the gas injection hole.

3. Process according to Claim 1 or Claim 2, characterized in that the further, open mould cavity is formed in a turnover mould, in which it is injected or filled with plastic material.

4. Process according to at least one of Claims 1 to 3, characterized in that the different plastic material has a different colour and/or a different composition.

5. Process according to at least one of Claims 1 to 4, characterized in that the first melt Injection point, the gas injection hole and/or the second melt injection point are spaced apart from one another in the mould cavity.

## Revendications

1. Procédé de fabrication de corps de brosse à paroi relativement épaisse, en particulier de brosses à dents en matière thermoplastique, dans lequel après l'injection d'une quantité de matière synthétique fondue prédéfinie, ne remplissant qu'en partie au moins un espace creux de moule (6) d'un moule (1), un medium de pression est introduit dans ledit espace creux par l'intermédiaire d'une canule (9) et la matière synthétique pas encore durcie est amenée au contact de la paroi de l'espace creux de moule (6) par l'intermédiaire de la formation d'une cavité (14) et dans lequel après l'enlèvement de la canule (9), l'ouverture d'entrée du gaz restante est fermée par l'injection de matière synthétique fondue,
la cavité (14) et l'ouverture d'entrée du gaz étant remplies dans un deuxième moule (21) par injection d'une autre matière synthétique.

2. Procédé selon la revendication 1, caractérisé en ce qu'avec l'autre matière synthétique injectée dans l'ouverture d'entrée de gaz, au moins un autre espace creux de moule (26) formé dans le deuxième moule (21) dans le domaine extérieur du corps de brosse est rempli.

3. Procédé selon la revendication 1 ou 2, caractérisé en ce que l'autre espace creux de moule libérable est formé dans un outil rotatif et y reçoit une injection de matière synthétique ou est rempli de matière synthétique.

4. Procédé selon au moins l'une des revendications 1 à 3, caractérisé en ce que l'autre matière synthétique présente une couleur différente et / ou une composition différente.

5. Procédé selon au moins l'une des revendications 1 à 4, caractérisé en ce que le premier point d'injection, l'ouverture d'entrée de gaz et / ou le deuxième point d'injection sont disposés dans l'espace creux du moule à une certaine distance les uns des autres.
